# EUROPEAN PATENT APPLICATION

(11) **EP 3 998 363 A1**
(43) Date of publication of application: **18.05.2022**
(21) Application number: 20841186.8
(22) Date of filing: 10.07.2020
(51) Int. Cl.: C22B 58/00, C22B 3/08

(54) **METHOD FOR PRODUCING GALLATE SOLUTION**

(30) Priority: 12.07.2019 RU 2019122382
(71) Applicant: Obshchestvo s Ogranichennoy Otvetstvennost'yu "Obedinennaya Kompaniya Rusal Inzhenerno- Tekhnologicheskiy Tsentr", Krasnoyarsk 660111 (RU)
(72) Inventor: DAMASKIN, Aleksandr Aleksandrovich, Krasnoyarsk, 660111 (RU); SUSS, Aleksandr Gennadievich, Krasnoyarsk, 660111 (RU); PECHENKIN, Maksim Nikolaevich, Krasnoyarsk, 660111 (RU); DAMASKINA, Anna Aleksandrovna, Krasnoyarsk, 660111 (RU)
(74) Representative: Tobiasz-Dumania, Katarzyna
(86) International application number: PCT/RU2020/050155
(87) International publication number: WO 2021/010868

(57) **Abstract**

A gallate solution is produced from a gallium-containing alkaline solution. The method comprises sorption of gallium from a circulating solution on an ion-exchange resin based on a divinylbenzene polymer, desorption of the gallium with a solution of sulfuric acid, thus obtaining a gallium-containing eluate, and then concentrating the gallium by converting it into the solid phase via neutralization of the eluate with a caustic solution, thereby precipitating gallium hydroxide at a predetermined temperature. The precipitate obtained is thickened and filtered off; it is then dissolved in a caustic solution until the desired concentration of gallium in the solution is achieved. The method makes it possible to increase the concentration of gallium by converting it into the solid phase while neutralizing acidic eluates with an alkaline solution, which simplifies the concentrating step and reduces the number of technological operations, and therefore reduces the cost of gallium production.

## Description

### Field of the invention

The invention relates to the field of metallurgy of rare metals, namely, to methods for extracting gallium from alkaline gallium-containing solutions, including recycled solutions of the alumina production.

### Background of the invention

A method for extracting gallium from aluminate solutions is known (patent RF 2157421, C22B58/00, C22B3/24, publication date: October 10, 2000). A reagent representing a vinyl chloride copolymer and a maleic anhydride copolymer on a silicon oxide skeleton is added to a gallium-containing solution. The resulting solution is cooled to (-4)-(-8)°C and mixed at this temperature for 25-30 min. The resulting slurry is thickened, after which the solution is decanted and the gallium containing precipitate is filtered out. The method eliminates the use of acids, allows to increase the degree of gallium extraction from the solution and reduce the process time, but cooling industrial aluminate solutions, the usual temperature of which is 80-100°C, to negative temperatures will require much energy and time, which significantly reduces the effect of using this method.

A method for extracting gallium from alkaline-carbonate aluminiumcontaining solutions is known (RF patent 2586168, C22B58/00, C22B3/26, publication date: June 10, 2016). The method involves the extraction of gallium with a solution of a N-(2-hydroxy-5-nonylbenzyl)-P, β-dihydroxyethylamine nitrogen-containing extractant in a mixture of diluents containing octane with the addition of 25 vol.% octanol. Next, gallium is separated from aluminium by re-extraction with a NaOH solution with a concentration of 4 mol/1. This method uses liquid organic compounds and solvents that have a high fire and explosion hazard, which imposes additional costs for creating conditions within the existing alumina production.

A method for extracting gallium from alkaline-carbonate aluminiumcontaining solutions is known (RF patent 2118391, C22B58/00, publication date: August 27, 1998). The method for obtaining gallium includes two stages of carbonisation of an aluminate solution. At the first stage, the aluminate solution is carbonised to a caustic alkali content of no more than 1-2 g/l, then the aluminium hydroxide precipitate is separated from the soda-alkaline solution. In the second stage, the aluminate solution is carbonised to a bicarbonate alkali content of 20-50 g/l, then the gallium enriched precipitate is separated, and gallium is extracted from the precipitate. In this case, the first stage is carried out in the presence of calcium-containing compounds at a ratio of CaO/Ga equal to (1-5)/1. For carbonation of a gallium-containing solution, a powerful source of carbon dioxide is necessary, gassing the solution with cylinder gas is economically inadvisable.

The closest to the claimed technical solution (prototype) is a method for extracting gallium during the refining aluminium ores to obtain alumina (RF patent 2051113, C02F1/42, publication date: December 27, 1995). The method consists in the fact that after the sorption of gallium on an ionite, the saturated ionite is washed with a solution containing 4-6 g/l sodium oxide for 0.5-2.0 hours and gallium is desorbed in two stages with a pH value of 1.0-2.5 being maintained at the 1st stage with the contact time of the ionite with the solution equal to 0.4-0.6 parts of the total desorption time. The subsequent concentration of gallium from acidic eluates is carried out by sorption on ampholyte VPK, and desorption is carried out with an alkaline solution in two stages with the time of contact of the ionite with the solution at 1st stage equal to 0.4-0.5 parts of the total desorption time. During the desorption processes, both during the sorption extraction of gallium and during its concentration, an apparatus with air mixing and a suspended ionite layer is used at the first stage, and an apparatus with a dense ionite layer is used at the second stage. The essence of the method consists in sequential two-stage sorption-desorption using two types of ionites, which complicates and increases the cost of production.

### Disclosure of the invention

The objective of the invention is to increase the degree of gallium extraction directly from alkaline-aluminate solutions obtained during processing bauxite by the Bayer method, followed by the concentration of gallium compounds in a solid precipitate.

The technical result is the solution of the assigned task, a rise of the concentration of gallium by converting it to the solid phase when neutralising acidic eluates with an alkaline solution, which simplifies the concentration process and reduces the number of technological operations and, as a result, reduces the cost of gallium production.

The technical result is achieved due to the fact that the method for obtaining a gallate solution from a solution of the alumina production includes the sorption of gallium from a recycled solution on a divinylbenzene polymer-based ionite, desorption of gallium with a solution of sulfuric acid to obtain a gallium-containing eluate, subsequent concentration of gallium by converting it to a solid phase by neutralisation of the eluate with a caustic solution to pH 6.8-7.2 with precipitation of a gallium hydroxide precipitate at a temperature of 40-95°C, thickening and filtration of the precipitate with its further dissolution in a caustic solution until a concentration of gallium in the solution of at least 20 g/dm³ is obtained.

Preferably, the concentration of the sulfuric acid solution should be 1-10 wt.% in order to minimise the chemical destruction of ionite; while the concentration of the caustic solution should be 50-500 g/dm³ Na₂O, the minimum concentration of the caustic solution is due to the limitation of the volume of solutions returned after neutralisation to the alumina production, while the maximum concentration of the caustic solution is due to the maximum allowed content of caustic alkali in the solution; in this case, the preparation of the gallate solution is carried out at a temperature of 60-80°C: this temperature range is due to the rate of dissolution of gallium hydroxide and the viscosity of the resulting gallate solution.

It is also advisable that the method includes a cooling stage to a temperature below 20°C before sorption of the recycled solution or after preparation of the gallate solution with filtering out impurity components.

After the stage of thickening and filtration, the neutral solution is sent to the alumina production, where it can be combined with neutralised effluents from the mud disposal area in an open water circulation system.

### Implementation of the invention

The essence of the method consists in a sequential single-stage sorption-desorption using a divinylbenzene polymer-based ionite, followed by the concentration of gallium by converting it to a solid phase during neutralisation of the acidic eluate with an alkaline solution to a pH of 6.8-7.2 with the precipitation of a gallium hydroxide precipitate at a given temperature, preferably 40-95°C, thickening and filtering the precipitate with its further dissolution in a caustic solution until a given concentration of gallium in solution is obtained, preferably, not less than 20 g/dm³. In other pH ranges, the degree of conversion of gallium to a solid precipitate is significantly lower, while the rate of clarification of the solution after neutralisation is reduced at lower and higher temperatures. It should be noted that only divinylbenzene polymer-based ionites of the ionites tested in the laboratory showed a positive technological result in the form of gallium sorption directly from recycled solutions.

After the thickening and filtration stage, the neutral solution is sent to the alumina production. In particular, it is possible to combine it with neutralised effluents from the mud disposal area in an open water circulation system.

To reduce the negative effect of the impurity components of the recycled solution on the sorption of gallium using a divinylbenzene polymer-based ionite, preliminary cooling of the recycled solution to a temperature below 20°C is required, while salts of vanadium and organic compounds crystallise from the solution. This cooling is recommended to be carried out at a V₂O₅ content of above 0.5 g/dm³ in the recycled solution.

To obtain higher quality indicators of the commercial product (gallium), it is necessary to cool the finished gallate solution to a temperature below 20°C, while vanadium salts crystallise from the solution. This cooling is recommended to be carried out at a V₂O₅ content in a gallate solution above 0.5 g/dm³.

The scope of legal protection is sought for a new method for obtaining a gallate solution from an alkaline gallium-containing solution, which differs from the prototype in that it includes the sorption of gallium from a recycled solution on a divinylbenzene polymer-based ionite, desorption of gallium with a solution of sulfuric acid to obtain a gallium-containing eluate, subsequent concentration of gallium by converting it to a solid phase by neutralisation of the eluate with a caustic solution with precipitation of a precipitate of gallium hydroxide at a given temperature, thickening and filtration of the precipitate with its further dissolution in a caustic solution until a given concentration of gallium in the solution is obtained. The concentration of the sulfuric acid solution should preferably be 1-10 wt.%, while the concentration of the caustic solution should be 50-500 g/dm³ Na₂O, the gallate solution should be preferably prepared at a temperature of 60-80°C. The method should also preferably include a cooling stage before sorption of the recycled solution and/or after preparation of the gallate solution. It is advisable that cooling is performed to a temperature below 20°C. While cooling, impurity components should be filtered out. After the thickening and filtration stage, the neutral solution is sent to the alumina production and/or after the thickening and filtration stage, the neutral solution is combined with the neutralised effluents from the mud disposal area in an open water circulation system and is sent to the alumina production. The precipitation of a gallium hydroxide precipitate should preferably be carried out at a temperature of 40-95°C, the concentration of gallium in the gallate solution should preferably be at least 20 g/dm³. Converting it to a solid phase by neutralisation of the eluate with a caustic solution is performed to pH 6.8-7.2. As an alkaline gallium-containing solution, it is preferable to use a solution of the alumina production. Accordingly, the gallate solution obtained by this method has a concentration of gallium in the solution of at least 20 g/dm³.

### Examples of specific implementations of the method

### Example 1

20.4 m³ of the recycled solution with a gallium content of 0.33 g/dm³ is sent for sorption on a divinylbenzene polymer-based ionite. During sorption, the gallium content in the solution is reduced to 0.16 g/dm³. The saturated ionite is sent for desorption by 5 wt.% sulfuric acid solution with a volume of 2.7 m³. At the same time, the gallium content in the eluate increases to 1 g/dm³. The resulting acidic eluate is neutralised by 236 dm³ of a strong caustic solution (450 g/dm³ Na₂O) to a pH of 6.8-7.2 with the precipitation of a gallium hydroxide precipitate at a temperature of 40°C. The resulting precipitate, containing mainly gallium hydroxide, is thickened and filtered out. The resulting 5 kg of precipitate, of which 3.46 kg is gallium hydroxide, is dissolved at a temperature of 60-80°C in a strong caustic solution until a concentration of gallium in the solution of 40 g/dm³ is obtained. The resulting solution is cooled to a temperature below 20°C, while the impurity components solidify and are further filtered out.

### Example 2

20.4 m³ of the recycled solution with a gallium content of 0.33 g/dm³ is sent for cooling to a temperature below 20°C for the isolation of impurity salts of vanadium. After cooling, the recycled solution is filtered out and sent for sorption on a divinylbenzene polymer-based ionite in an amount of 19.4 m³. During sorption, the gallium content in the solution is reduced to 0.16 g/dm³. The saturated ionite is sent for desorption by 10 wt.% sulfuric acid solution with a volume of 1.3 m³. At the same time, the gallium content in the eluate increases to 2 g/dm³. The resulting acidic eluate is neutralised by 201.6 dm³ of a strong caustic solution (500 g/dm³ Na₂O) to a pH of 6.8-7.2 with the precipitation of a gallium hydroxide precipitate at a temperature of 95°C. The resulting precipitate, containing mainly gallium hydroxide, is thickened and filtered out. The resulting 4.75 kg of precipitate, of which 3.29 kg is gallium hydroxide, is dissolved at a temperature of 60-80°C in a strong caustic solution until a concentration of gallium in the solution of 70 g/dm³ is obtained.

### Example 3

20.4 m³ of the recycled solution with a gallium content of 0.33 g/dm³ is sent for sorption on ionite. During sorption, the gallium content in the solution is reduced to 0.16 g/dm³. The saturated divinylbenzene polymer-based ionite is sent for desorption by 1 wt.% sulfuric acid solution with a volume of 13.5 m³. At the same time, the gallium content in the eluate increases to 0.4 g/dm³. The resulting acidic eluate is neutralised by 2145 dm³ of a strong caustic solution (50 g/dm³ Na₂O) to a pH of 6.8-7.2 with the precipitation of a gallium hydroxide precipitate at a temperature of 95°C. The resulting precipitate, containing mainly gallium hydroxide, is thickened and filtered out. The resulting 5 kg of precipitate, of which 3.46 kg is gallium hydroxide, is dissolved at a temperature of 60-80°C in a strong caustic solution until the gallium concentration of 20 g/dm³ is obtained in the solution. The resulting solution is cooled to a temperature below 20°C, while the impurity components solidify and are further filtered out.

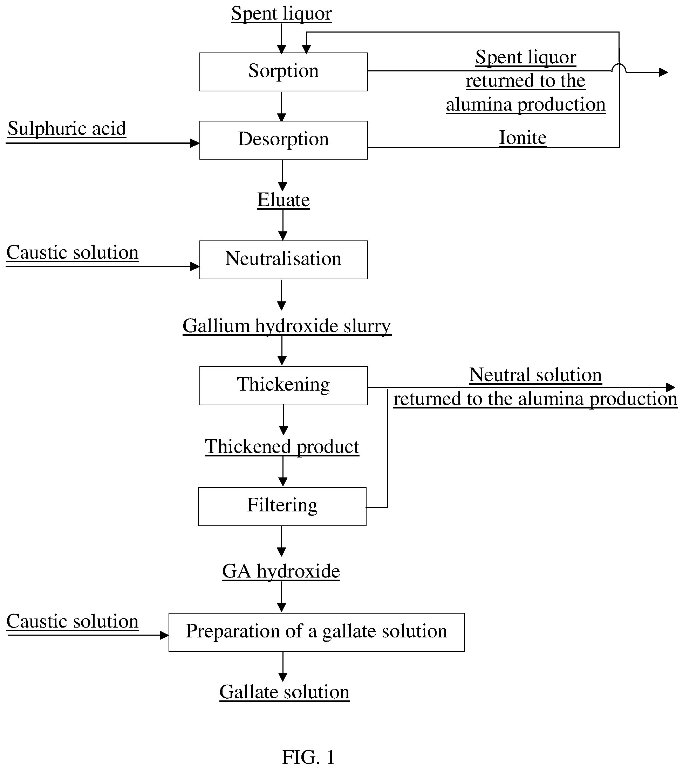

## Claims

1. The method for obtaining a gallate solution from an alkaline gallium-containing solution, which differs from the prototype in that it includes the sorption of gallium from a recycled solution on a divinylbenzene polymer-based ionite, desorption of gallium with a solution of sulfuric acid to obtain a gallium-containing eluate, subsequent concentration of gallium by converting it to a solid phase by neutralisation of the eluate with a caustic solution with precipitation of a precipitate of gallium hydroxide at a given temperature, thickening and filtration of the precipitate with its further dissolution in a caustic solution until a given concentration of gallium in the solution is obtained.

2. The method according to claim 1, wherein the concentration of a solution of sulfuric acid is 1-10 wt.%.

3. The method according to claim 1, wherein the concentration of the caustic solution is 50-500 g/dm³ of Na20.

4. The method according to claim 1, wherein the preparation of a gallate solution is carried out at a temperature of 60-80°C.

5. The method according to claim 1, **characterised in that** it includes a cooling stage before sorption of the spent liquor and/or after preparation of the gallate solution.

6. The method according to claim 5, **characterised in that** cooling is carried out to a temperature below 20°C.

7. The method according to claim 5, **characterised in that** impurity components are filtered out during cooling.

8. The method according to claim 1, **characterised in that** after the thickening and filtration stages, the neutral solution is sent to the alumina production.

9. The method according to claim 1, **characterised in that** after the stage of thickening and filtration, the neutral solution is combined with neutralised effluents from the mud disposal area in an open water circulation system and sent to the alumina production.

10. The method according to claim 1, **characterised in that** the precipitation of a gallium hydroxide precipitate is carried out at a temperature of 40-95°C.

11. The method according to claim 1, **characterised in that** the minimum concentration of gallium obtained in the gallate solution is 20 g/dm³.

12. The method according to claim 1, **characterised in that** the transformation into a solid phase by neutralisation of the eluate with a caustic solution is carried out to a pH of 6.8-7.2.

13. The method according to claim 1, **characterised in that** a solution of alumina production is used as the alkaline gallium-containing solution.

14. The gallate solution obtained by the method according to any of claims 1-13.
